# EUROPÄISCHE PATENTSCHRIFT

(11) **EP 1 747 452 B1**
(45) Veröffentlichungstag und Bekanntmachung des Hinweises auf die Patenterteilung: **27.07.2011**
(21) Anmeldenummer: 05717078.9
(22) Anmeldetag: 16.03.2005
(51) Int. Cl.: G01N 27/407

(54) **FESTELEKTROLYT-SENSORELEMENT MIT DIFFUSIONSBARRIERE**
SOLID ELECTROLYTE SENSOR ELEMENT COMPRISING A DIFFUSION BARRIER
ELEMENT DETECTEUR A ELECTROLYTE SOLIDE COMPORTANT UNE BARRIERE DE DIFFUSION

(30) Priorität: 10.05.2004 DE 102004023004
(43) Veröffentlichungstag der Anmeldung: 31.01.2007
(73) Patentinhaber: ROBERT BOSCH GMBH, 70442 Stuttgart (DE)
(72) Erfinder: STAHL, Roland, 71691 Freiberg (DE); WIEDENMANN, Hans-Martin, 70195 Stuttgart (DE); HEIMANN, Detlef, 70839 Gerlingen (DE); DIEHL, Lothar, 70839 Gerlingen (DE); MOSER, Thomas, 71701 Schwieberdingen (DE); RODEWALD, Stefan, 71254 Ditzingen (DE); BAHLO, Jan, 75177 Pforzheim (DE)
(86) Internationale Anmeldenummer: PCT/EP2005/051216
(87) Internationale Veröffentlichungsnummer: WO 2005/108972

(56) Entgegenhaltungen:
- DE-A1- 10 122 271
- DE-C1- 10 156 248
- US-A- 4 859 307
- DIETZ H: "Gas-diffusion-controlled solid-electrolyte oxygen sensors" SOLID STATE IONICS NETHERLANDS, Bd. 6, Nr. 2, März 1982 (1982-03), Seiten 175-183, XP002334253 ISSN: 0167-2738

## Beschreibung

### Stand der Technik

Die Erfindung geht aus von einem Sensorelement wie in der DE 103 05 856 A1 beschrieben. Das Sensorelement ist in Planartechnik schichtförmig aufgebaut und enthält einen Messgasraum, in dem auf gegenüberliegenden Seiten zwei ringförmige Elektroden angeordnet sind. Die beiden Elektroden sind jeweils Teil einer elektrochemischen Zelle, zu der eine weitere Elektrode sowie ein zwischen den Elektroden angeordneter Festelektrolyten gehört. Die beiden im Messgasraum angeordneten Elektroden sind über eine ringformige Diffusionsbarriere und eine Gaszutrittsöffnung mit einem außerhalb des Sensorelements befindlichen Messgas verbunden. Die eine der beiden elektrochemischen Zellen wird als Nernstzelle betrieben, bei der sich zwischen der Elektrode im Messgasraum und einer einem Referenzgas ausgesetzten Elektrode eine Spannung (Nernstspannung) ausbildet, die ein Maß für das Verhältnis des Sauerstoffpartialdrucks an der Elektrode im Messgasraum zu dem, Sauerstoffpartialdruck an der dem Referenzgas ausgesetzten Elektrode ist. Die andere der beiden elektrochemischen Zellen, die neben der im dem Messgasraum angeordneten Elektrode eine auf der Außenseite des Sensorelements aufgebrachte Elektrode umfasst, wird als elektrochemische Pumpzelle betrieben, mit der derart Sauerstoff in den oder aus dem Messgasraum gepumpt wird, dass im Messgasraum ein Sauerstoffpartialdruck von Lambda=1 vorliegt.

Derartige Sensorelemente werden beispielsweise zur Bestimmung der Sauerstoffkonzentration in Abgasen von Brennkraftmaschinen verwendet. Im Betrieb können sogenannte Druckpulse, also plötzliche starke Druckanstiege, im Messgas auftreten. Aufgrund des Druckanstiegs wird Messgas mit einer hohen Sauerstoffkonzentration in den Messgasraum gedrückt, wodurch das Sensorelement falsch misst. Weitere Sensorelemente sind aus der US 4 859 307 A und der DE 10 156 248 C1 bekannt, und stellen den Stand der Technik nach dem Oberbegriff des unabhängigen Anspruchs dar.

Solche Sensorelemente haben den Vorteil, dass die Abhängigkeit des Messsignals des Sensorelements von Druckschwankungen bei ansonsten gleicher Messgaszusammensetzung reduziert wird.

### Kurzdarstellung der Erfindung

Das Sensorelement weist einen Messgasraum auf, der über eine Diffusionsbarriere mit dem außerhalb des Sensorelements befindlichen Messgas verbunden ist. Auf der Außenfläche des Sensorelements ist eine erste Elektrode angeordnet, die durch einen Festelektrolyten mit einer im Messgasraum angeordneten zweiten Elektrode verbunden ist. Durch Anlegen einer Pumpspannung wird derart Sauerstoff in den Messgasraum oder aus dem Messgasraum gepumpt, dass im Messgasraum ein Sauerstoffpartialdruck von Lambda = 1 vorliegt. Weist das Messgas einen hohen Sauerstoffpartialdruck auf, so wird Sauerstoff aus dem Messgasraum herausgepumpt, wodurch sich in der Diffusionsbarriere bezüglich des Sauerstoffpartialdrucks ein Gradient ausbildet, während der Sauerstoffpartialdruck im Messgasraum örtlich weitgehend konstant ist, da der Gaszirkulation innerhalb des Messgasraums nahezu kein Diffusionswiderstand entgegensteht.

Erhöht sich nun der Druck des Messgases (bei gleicher Sauerstoffkonzentration), so erhöht sich auch der Druck des Gases in dem Messgasraum. Bei dieser Druckerhöhung wird das innerhalb der Diffusionsbarriere befindliche Gas in den Messgasraum gedrückt. Vor der Druckerhöhung hat das in der Diffusionsbarriere befindliche Gas jedoch nur auf der dem Messgasraum zugewandten Seite der Diffusionsbarriere einen Sauerstoffpartialdruck von ungefähr Lambda = 1. Auf der entgegengesetzten Seite entspricht der Sauerstoffpartialdruck ungefähr dem (hohen) Sauerstoffpartialdruck des außerhalb des Sensorelements befindlichen Messgases. Damit tritt bei einer Druckerhöhung im Messgasraum eine plötzliche Erhöhung des Sauerstoffpartialdrucks auf, ohne dass sich die Sauerstoffkonzentration im Messgas außerhalb des Sensorelements tatsächlich erhöht hätte.

Daher ist vorgesehen, dass das Volumen des Messgasraums nicht größer ist als das Volumen der Diffusionsbarriere. In dieser Schrift ist unter dem Volumen des Messgasraums das Volumen des in dem Messgasraum befindlichen Gases zu verstehen. Bei einem als Hohlraum ausgebildeten Messgasraum ist dies also einfach das durch die Begrenzung des Hohlraums definierte Volumen. Weist der Hohlraum eine poröse Füllung auf (die keinen wesentlichen Diffusionswiderstand darstellt, also einen hohen Porenanteil aufweist), so ist unter dem Volumen des Messgasraums das Volumen der Poren innerhalb des Messgasraums zu verstehen. Dagegen wird unter dem Volumen der porösen Diffusionsbarriere das Volumen der Poren und des die Poren umgebenden Materials verstanden.

Der Bereich der Diffusionsbarriere unterscheidet sich von dem Messgasraum dadurch, dass sich beim Betrieb des Sensorelements innerhalb der Diffusionsbarriere ein (wesentlicher) Sauerstoffpartialdruckgradient ausbildet, während im Messgasraum ein weitgehend konstanter Sauerstoffpartialdruck vorliegt.

Durch die in den abhängigen Ansprüchen aufgeführten Maßnahmen sind vorteilhafte Weiterbildungen des in dem unabhängigen Anspruch genannten Sensorelements möglich.

Vorteilhaft beträgt das Volumen des Messgasraumes höchstens 80 Prozent, insbesondere höchstens 50 Prozent, des Volumens der Diffusionsbarriere. Hiedurch wird erreicht, dass auch bei besonders starken Druckschwankungen außerhalb des Sensorelements die Messfunktion des Sensorelements nicht oder nur geringfügig gestört wird.

Bevorzugt ist die Diffusionsbarriere zylinderförmig oder hohlzylinderförmig und von dem hohlzylinderförmigen Messgasraum umgeben, wobei die Diffusionsbarriere und der Messgasraum bevorzugt in einer Schichtebene zwischen einer ersten und einer zweiten Festelektrolytschicht angeordnet sind. In die erste Festelektrolytschicht ist bevorzugt eine Gaszutrittsöffnung eingebracht, die zu der mittigen Aussparung der hohlzylinderförmigen Diffusionsbarriere führt. Bei einer derartigen Anordnung gelangt das Abgas über die Gaszutrittsöffnung in die Mitte der Diffusionsbarriere und diffundiert beziehungsweise strömt strahlenförmig in radialer Richtung durch die Diffusionsbarriere in den Messgasraum. Hierbei vergrößert sich von der Mitte der Diffusionsbarriere hin zum Messgasraum der Diffusionsbeziehungsweise Strömungsquerschnitt. Dies hat den Vorteil, dass eine Druckwelle, die aufgrund von Druckschwankungen, insbesondere Druckerhöhungen, des außerhalb des Sensorelements befindlichen Messgases in den Messgasraum gelangt, sich beim Durchqueren der Diffusionsbarriere aufgrund der Zylindergeometrie abschwächt.

Erfindungsgemäßβ ist die Höhe des Messgasraums, also die Ausdehnung des Messgasraum in einer Richtung senkrecht zur Schichtebene des Sensorelements kleiner als die Höhe der Diffusionsbarriere. Überdies ist vorgesehen, dass zwischen der ersten Festelektrolytschicht: und der zweiten Elektrode (42) oder auf der zweiten Festelektrolytschicht eine Abstandsschicht vorgesehen ist, die aus einem Festelektrolyt aufweisen den Material besteht. Vorteilhaft beträgt die Höhe des Messgasraums höchstens 80 Prozent, insbesondere höchstens 65 Prozent, der Höhe der Diffusionsbarriere.

Optional sind im Messgasraum Segmente vorgesehen, in denen die Höhe des Messgasraums im Bereich von 10 bis 60 Prozent, insbesondere im Bereich von 25 bis 45 Prozent, der Höhe der Diffusionsbarriere liegt. Bei einer derartigen Anordnung ist der azimutale Gasaustausch innerhalb des Messgasraumes sichergestellt.

Bevorzugt weist der Messgasraum einen Außendurchmesser im Bereich von 3,0 mm bis 4,5 mm, insbesondere 3,8 mm, auf, und der Innendurchmesser des Messgasraums und damit der Außendurchmesser der Diffusionsbarriere liegt im Bereich von 1,5 mm bis 3,5 mm, insbesondere bei 2,3 mm. Besonders bevorzugt ist der Innendurchmesser der ringförmigen zweiten Elektrode kleiner als der Außendurchmesser der Diffusionsbarriere, so dass die zweite Elektrode bereichsweise unter der Diffusionsbarriere angeordnet ist. In diesem Bereich ist die zweiten Elektrode durch eine gasdichte Schicht von der Diffusionsbarriere getrennt, so dass das Messgas zur zweiten Elektrode nur über den Messgasraum gelangen kann. Hierbei ist vorteilhaft, dass die Elektrode auf einer großen Fläche in Kontakt mit dem Festelektrolyten steht und somit eine hohe Pumpleistung zwischen der ersten und der zweiten Elektrode erreicht werden kann. Hierbei wird ausgenutzt, dass das Messgas durch die Poren der offenporösen zweiten Elektrode auch in die Bereiche unter der gasdichten Schicht (unter der Diffusionsbarriere) strömen kann.

Bevorzugt ist der Messgasraum als Hohlraum gestaltet. Alternativ kann der Messgasraum mit einem porösen Material gefüllt sein, wobei sicherzustellen ist, dass das poröse Material im Messgasraum die Gaszirkulation innerhalb des Messgasraumes nicht oder nur unwesentlich behindert. Damit liegt im Messgasraum ein nahezu konstanter (niedriger) Sauerstoffpartialdruck, beispielsweise Lambda = 1, vor. Der Messgasraum und die Diffusionsbarriere sind also derart zu gestalten, dass (bei einem hohen Sauerstoffpartialdruck im Messgas) die Verringerung des Sauerstoffpartialdrucks auf dem Diffusionsweg zwischen der Gaszutrittsöffnung und dem Messgasraum im wesentlichen innerhalb der Diffusionsbarriere erfolgt, während sich innerhalb des Messgasraums bezüglich des Sauerstoffpartialdrucks kein oder kein wesentlicher Gradient ausbildet. Hierzu ist vorgesehen, dass die Diffusionsbarriere einen Porenanteil im Bereich von 10 bis 30 Prozent aufweist, und dass der Messgasraum als Hohlraum gestaltet ist oder einen Porenanteil aufweist, der mindestens 60 Prozent beträgt und dabei um mindestens 30 Prozent größer ist als der Porenanteil der Diffusionsbarriere.

### Zeichnung

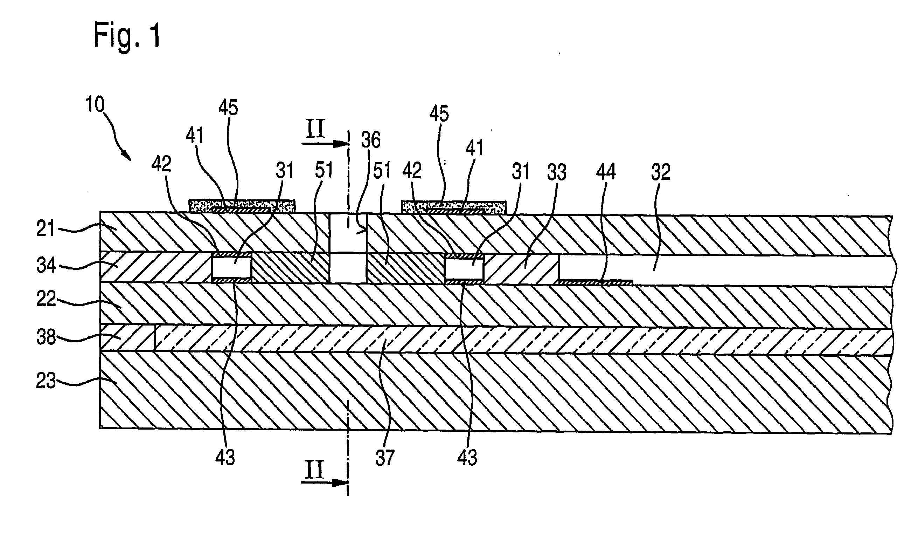

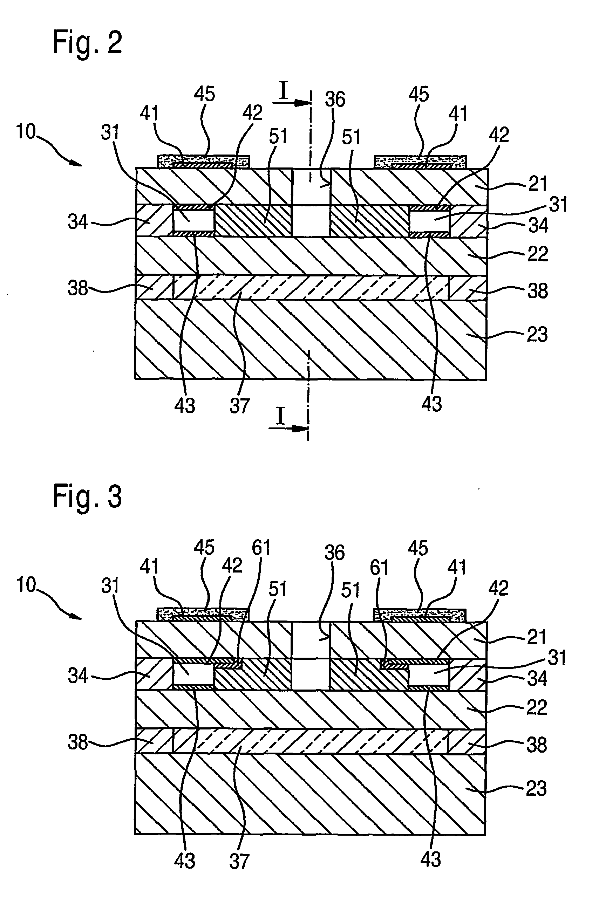

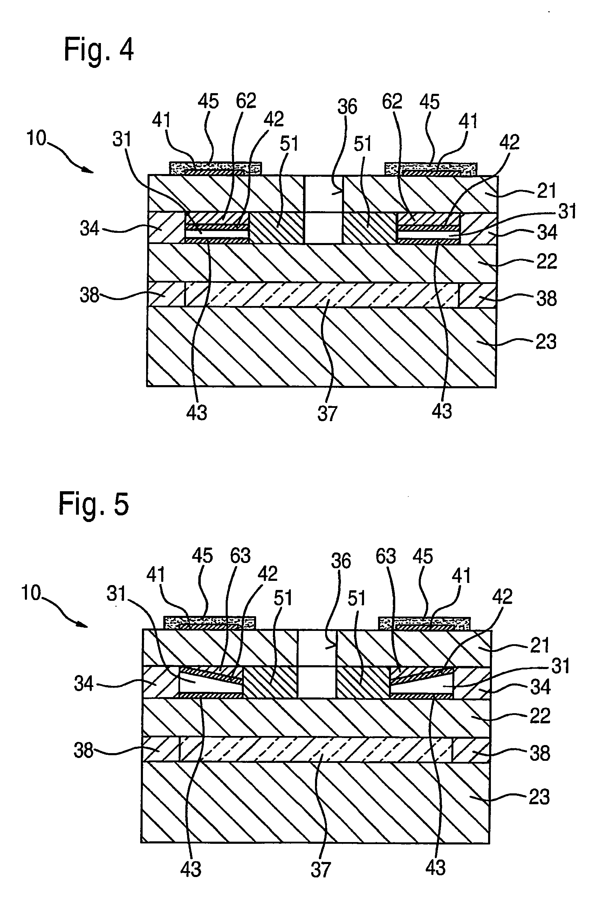

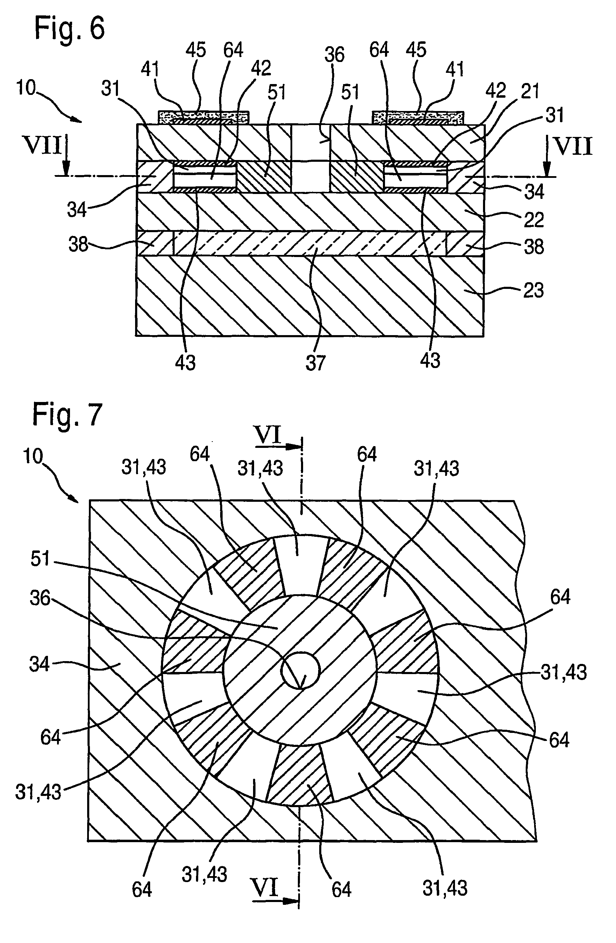

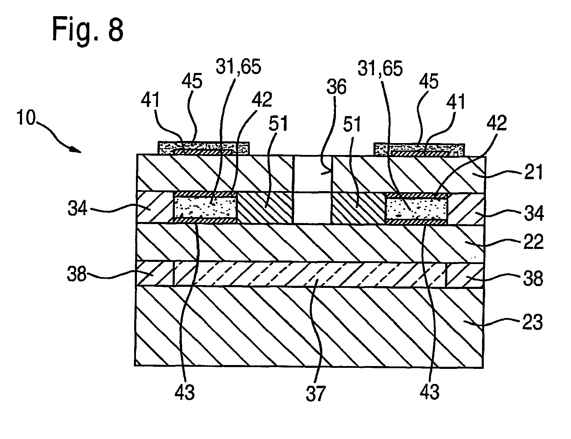

Ausführungsbeispiele der Erfindung sind in den Figuren 4 und 5 der Zeichnung dargestellt und in der nachfolgenden Beschreibung näher erläutert. Figur 1 zeigt einen Längsschnitt durch den messseitigen Endabschnitt eines Sensorelements entlang der Linie I - I in Figur 2, Figur 2 zeigt einen Querschnitt entlang der Linie II - II in Figur 1, die Figuren 3 bis 6 zeigen Sensorelement im Querschnitt, die Figur 7 zeigt einen Schnitt entlang der Linie VII- VII in Figur 6, und Figur 8 zeigt Sensorelement im Querschnitt.

### Beschreibung der Ausführungsbeispiele

Figur 1 und Figur 2 zeigen ein planares, schichtförmig aufgebautes Sensorelement 10, das in einem Gehäuse mittels einer Dichtanordnung gasdicht angeordnet ist und dem Nachweis des Sauerstoffpartialdrucks in einem Abgas einer Brennkraftmaschine dient. In Figur 1 dargestellt ist der die Messelemente enthaltende messseitige Abschnitt des Sensorelements 10. Der nicht dargestellte anschlussseitige Abschnitt des Sensorelements 10 enthält den Zuleitungsbereich und den Kontaktierungsbereich. Der Aufbau des Sensorelements und der Verbau des Sensorelements im Gehäuse des Gasmessfühlers ist beispielsweise in Automotive Electronics Handbook, Editor in chief: Ronald K. Jurgen, Second Edition, 1999, McGraw-Hill beschrieben.

Das Sensorelement 10 weist eine erste, eine zweite und eine dritte Festelektrolytschicht 21, 22, 23 auf. In das Sensorelement 10 ist zwischen der ersten und der zweiten Festelektrolytschicht 21, 22 ein ringförmiger (hohlzylinderförmiger) Messgasraum 31 eingebracht, in dessen Mitte eine ebenfalls ringförmige (hohlzylinderförmige), porös ausgebildete Diffusionsbarnere 51 vorgesehen ist. Das außerhalb des Sensorelements 10 befindliche Messgas kann über eine Gaszutrittsöffnung 36, die in die erste Festelektrolytschicht 21 eingebracht ist und in die Mitte der Diffusionsbarriere 51 mündet, und durch die Diffusionsbarriere 51 in den Messgasraum 31 gelangen. Der Messgasraum 31 ist seitlich durch einen Dichtrahmen 34 abgedichtet.

Zwischen der ersten und der zweiten Festelektrolytschicht 21, 22 ist weiterhin ein Referenzgasraum 32 vorgesehen, der durch ein Trennelement 33 vom Messgasraum 31 gasdicht getrennt ist und der sich in Richtung der Längsachse des Sensorelements 10 erstreckt. Der Referenzgasraum 32 enthält als Referenzgas ein Gas mit einem hohen Sauerstoffanteil, beispielsweise Umgebungsluft.

Zwischen der zweiten und der dritten Festelektrolytschicht 22, 23 ist ein Heizelement 37 vorgesehen, das eine Heizerleiterbahn enthält, die durch eine Isolierung von den umgebenden Festelektrolytschichten getrennt ist (Heizerleiterbahn und Isolierung sind nicht getrennt dargestellt). Das Heizelement 37 ist seitlich von einem Heizerrahmen 38 umgeben, der das Heizelement 37 elektrisch isoliert und gasdicht abdichtet.

Auf der Außenfläche der ersten Festelektrolytschicht 21 ist eine ringförmige erste Elektrode 41 vorgesehen, in deren Mitte die Gaszutrittsöffnung 36 liegt. Die erste Elektrode 41 ist mit einer porösen Schutzschicht 45 überdeckt. Im Messgasraum 31 ist auf der der ersten Elektrode 41 gegenüberliegenden Seite der ersten Festelektrolytschicht 21 eine ringförmige zweite Elektrode 42 aufgebracht. Auf der zweiten Festelektrolytschicht 22 ist im Messgasraum 31 (der zweiten Elektrode 42 gegenüberliegend) eine ebenfalls ringförmige dritte Elektrode 43 angeordnet. Eine vierte Elektrode 44 ist im Referenzgasraum 32 vorgesehen.

Die erste und die zweite Elektrode 41, 42 und der zwischen der ersten und der zweiten Elektrode 41, 42 liegende Festelektrolyt 21 bilden eine elektrochemische Zelle, die durch eine außerhalb des Sensorelements 10 angeordnete Beschaltung als Pumpzelle betrieben wird. Die dritte und die vierte Elektrode 43, 44 und der zwischen der dritten und der vierten Elektrode 43, 44 liegende Festelektrolyt 22 bilden eine als Nernstzelle betriebene elektrochemische Zelle. Die Nernstzelle misst den Sauerstoffpartialdruck im Messgasraum 31. Die Pumpzelle pumpt derart Sauerstoff in den oder aus dem Messgasraum 31, dass im Messgasraum 31 ein Sauerstoffpartialdruck von Lambda=1 vorliegt. Derartige Sensorelemente sind dem Fachmann als Breitband-Lambda-Sonden bekannt.

Weist das Messgas außerhalb des Sensorelements 10 einen hohen Sauerstoffpartialdruck auf, so fällt der Sauerstoffpartialdruck entlang des Diffusionsweges in den Messgasraum 31 im wesentlichen innerhalb der Diffusionsbarriere 51 auf ungefähr Lambda =1 ab, während innerhalb des Messgasraums 31 und in der Regel auch in der Gaszutrittsöffnung 36 ein nahezu konstanter Sauerstoffpartialdruck vorliegt.

Der Außendurchmesser des Messgasraums 31 liegt bei 3,3 mm, der Innendurchmesser des Messgasraums 31 und damit auch der Außendurchmesser der Diffusionsbarriere 51 liegen bei 2,1 mm. Der Durchmesser der Gaszutrittsöffnung 36 und damit der Innendurchmesser der Diffusionsbarriere 51 beträgt 0,4 mm. Die Höhe des Messgasraums 31 und der Diffusionsbarriere 51 beträgt ungefähr 30 µm. Damit weist der Messgasraum 31 ein Volumen von ungefähr 0,16 mm³ auf, das sich noch durch das von den Elektroden eingenommene Volumen auf 0,08 mm³ vermindert. Das Volumen der Diffusionsbarriere 51 beträgt 0,10 mm³ und ist damit größer als das Volumen des Messgasraums 31.

Alternativ beträgt der Außendurchmesser der Diffusionsbarriere 51 2,3 mm, während der Außendurchmesser des Messgasraums 31 unverändert bei 3,3 mm und der Innendurchmesser der Diffusionsbarriere 51 bei 0,4 mm bleiben. Bei dieser Ausführungsform liegt das Volumen des Messgasraums 31 ungefähr bei 0,70 mm³ und das Volumen der Diffusionsbarriere 51 bei 0,12 mm³. Das Volumen des Messgasraums 31 beträgt damit ungefähr 60 Prozent des Volumens der Diffusionsbarriere 51.

Bei dem sensorelement gemäß Figur 1 und 2 bedeckt die zweite beziehungsweise dritte Elektrode 42, 43 innerhalb des Messgasraums 31 die gesamte Oberfläche der ersten beziehungsweise der zweiten Festelektrolytschicht 21, 22. Die Elektrodenfläche der zweiten und der dritten Elektrode 42, 43 endet an der äußeren Mantelfläche der Diffusionsbarriere 51. Das in Figur 3 dargestellte zweite Ausführungsbeispiel unterscheidet sich vom ersten Ausführungsbeispiel dadurch, dass die zweite Elektrode 42 sich bis in den Bereich der Diffusionsbarriere 51 hinein erstreckt, und dass der Innendurchmesser der zweiten Elektrode 42 um 0,4 mm kleiner ist als der Außendurchmesser der Diffusionsbarriere 51. Um zu vermeiden, dass die Elektrode mit Messgas in Berührung kommt, das die Diffusionsbarriere 51 nicht vollständig durchlaufen hat, ist die zweite Elektrode 42 im Bereich der Diffusionsbarriere 51 durch eine gasdichte Abdeckschicht 61 abgedeckt. Damit kann Messgas in den Bereich der zweiten Elektrode 42, der unter der gasdichten Abdeckschicht 61 liegt, nur über den Messgasraum 31 gelangen. Da die zweite Elektrode 42 offenporös ist, strömt das Messgas innerhalb der zweiten Elektrode 42 in den Bereich unter der gasdichten Abdeckschicht 61.

Die Figuren 4 und 5 zeigen als Ausführungsbeispiele der Erfindung ein Sensorelement 10, bei dem zwischen der ersten Festelektrolytschicht 21 und der zweiten Elektrode 42 eine Abstandsschicht 62 vorgesehen, die einen Festelektrolyten aufweist und deren Schichtdicke ungefähr 10 µm beträgt. Damit ist der Abstand zwischen der Abstandsschicht 62 und der zweiten Festelektrolytschicht 22 im Bereich des Messgasraums 31 kleiner als der Abstand zwischen der ersten und der zweiten Festelektrolytschicht 21, 22 im Bereich der Diffusionsbarriere 51. Bei dem Ausführungsbeispiel gemäß Figur 4 beträgt der Abstand zwischen der Abstandsschicht 62 zu der zweiten Festelektrolytschicht 22 ungefähr 20 µm. Die Höhe der Diffusionsbarriere 51 liegt bei 30 µm. Bei dem Ausführungsbeispiel gemäß Figur 5 weist die Abstandsschicht 63 eine von der Innenseite des Messgasraums 31 in Richtung der Außenseite des Messgasraums 31 eine abnehmende Schichtdicke auf. Die Abstandsschicht 63 bildet somit eine Schräge, auf der die zweite Elektrode 42 angeordnet ist. Alternativ kann die Abstandsschicht 63 stufenförmig sein.

Die Figuren 6 und 7 zeigen ein Sensorelement, bei dem im Messgasraum 31 auf der zweiten Festelektrolytschicht 22 beziehungsweise auf der dritten Elektrode 43 Segmente 64 aufgebracht sind. Im Bereich der Segmente 64 beträgt die Höhe des Messgasraums 31, also der Abstand zwischen dem Segment 64 und der zweiten Festelektrolytschicht 22, 15 µm und damit nur 50 Prozent der Höhe der Diffusionsbarriere 51 und 50 Prozent der Höhe des Messgasraums 31 in den neben den Segmenten 64 liegenden Bereichen. Durch die Segmente 64 wird der Messgasraum 31 in Bereiche mit einer Breite von 25 µm bis 300 µm, vorzugsweise von 80 µm bis 120 µm unterteilt. Die Anzahl der Segmente 64 ist entsprechend den Abmessungen des Messgasraums 31 anzupassen. Die Segmente 64 sind keilförmig, die Verlängerung der Seitenflächen der Segmente 64 schneiden die Symmetrieachse des hohlzylindrischen Messgasraums 31. Alternativ können die Seitenflächen eines Segments auch zueinander parallel ausgerichtet sein, so dass die Segmente eine konstante Breite aufweisen.

Bei dem in Figur 8 dargestellten Sensorelement ist der Messgasraum 31 mit einem porösen Material 65 gefüllt. Das poröse Material 65 weist einen Porenanteil von 80 Prozent auf, während der Porenanteil der Diffusionsbarriere 51 bei 30 Prozent liegt.

Bei den Sensorelementen gemäß den Figuren 3 bis 8 liegt das Volumen des Messgasraums 31 im Bereich von 50 bis 80 Prozent des Volumens der Diffusionsbarriere 51.

## Patentansprüche

1. Sensorelement (10), insbesondere zum Nachweis der Konzentration einer Gaskomponente eines Messgases, vorzugsweise zur Bestimmung des Sauerstoffgehalts eines Abgases einer Brennkraftmaschine, mit einer ersten Elektrode (41) und einer zweiten Elektrode (42), die durch einen Festelektrolyten (21) elektrisch verbunden sind, wobei die zweite Elektrode (42) in einem in das Sensorelement (10) eingebrachten Messgasraum (31) angeordnet ist, der über eine Diffusionsbarriere (51) mit dem außerhalb des Sensorelements (10) befindlichen Messgas in Verbindung steht, und wobei das Volumen des Messgasraums (31) nicht größer als das Volumen der Diffusionsbarriere (51) ist, **dadurch gekennzeichnet, dass** die Höhe des Messgasraums (31), also seine Ausdehnung in einer Richtung senkrecht zu einer Schichtebene des Sensorelements (10), zumindest bereichsweise kleiner ist als die Höhe der Diffusionsbarriere (51) und dass zwischen der ersten Festelektrolytschicht (21) und der zweiten Elektrode (42) oder auf der zweiten Festelektrolytschicht (22) eine Abstandsschicht (62, 63) vorgesehen ist, die aus einem einen Festelektrolyten aufweisenden Material besteht.

2. Sensorelement nach Anspruch 1, **dadurch gekennzeichnet, dass** die Diffusionsbarriere (51) zylinderförmig oder hohlzylinderförmig ist und von dem hohlzylinderförmigen Messgasraum (31) umgeben ist.

3. Sensorelement nach Anspruch 1 oder 2, **dadurch gekennzeichnet, dass** die Diffusionsbarriere (51) und der Messgasraum (31) in einer Schichtebene zwischen einer ersten Festelektrolytschicht (21) und einer zweiten Festelektrolytschicht (22) angeordnet sind, und dass der Messgasraum (31) die Diffusionsbarriere (51) in dieser Schichtebene umgibt.

4. Sensorelement nach Anspruch 3, **dadurch gekennzeichnet, dass** in die erste Festelektrolytschicht (21) eine zur Mitte der Diffusionsbarriere (51) führende Gaszutrittsöffnung (36) eingebracht ist, und dass der Messgasraum (31) über die Diffusionsbarriere (51) und die Gaszutrittsöffnung (36) mit dem außerhalb des Sensorelements (10) befindlichen Messgas verbunden ist.

5. Sensorelement nach einem der vorhergehenden Ansprüche, **dadurch gekennzeichnet, dass** das Volumen des Messgasraums (31) höchstens 80 Prozent des Volumens der Diffusionsbarriere (51) beträgt.

6. Sensorelement nach einem der vorangehenden Ansprüche, **dadurch gekennzeichnet, dass** die Höhe des Messgasraums (31) zumindest bereichsweise höchstens 80 Prozent, insbesondere höchstens 65 Prozent, der Höhe der Diffusionsbarriere (51) beträgt.

7. Sensorelement nach einem der vorangehenden Ansprüche, **dadurch gekennzeichnet, dass** im Messgasraum (31) Segmente (64) vorgesehen sind, in deren Bereich die Höhe des Messgasraums (31) höchstens 80 Prozent, insbesondere höchstens 65 Prozent, der Höhe der Diffusionsbarriere (51) beträgt.

8. Sensorelement nach Anspruch 7, **dadurch gekennzeichnet, dass** im Bereich der Segmente (64) die Höhe des Messgasraums (31) mindestens 10 Prozent, insbesondere mindestens 25 Prozent, der Höhe der Diffusionsbarriere (51) beträgt.

9. Sensorelement nach einem der Ansprüche 2 bis 8, **dadurch gekennzeichnet, dass** der Messgasraum (31) einen Außendurchmesser im Bereich von 2,5 mm bis 4,5 mm, insbesondere von 3,3 mm, aufweist und dass der Innendurchmesser des Messgasraums (31) und damit der Außendurchmesser der Diffusionsbarriere (51) im Bereich von 2,0 mm bis 3,5 mm, insbesondere bei 2,8 mm, liegt.

10. Sensorelement nach Anspruch 9, **dadurch gekennzeichnet, dass** die zweite Elektrode (42) einen Abschnitt aufweist, der zwischen der Diffusionsbarriere (51) und dem Festelektrolyten (21) angeordnet ist, wobei dieser Abschnitt der zweiten Elektrode (42) durch eine gasdichte Abdeckschicht (61) von der Diffusionsbarriere (51) getrennt ist.

11. Sensorelement nach einem der vorhergehenden Ansprüche, **dadurch gekennzeichnet, dass** die Diffusionsbarriere (51) offenporös gestaltet ist und einen Porenanteil im Bereich von 10 bis 30 Prozent aufweist, und dass der Messgasraum (31) als Hohlraum ausgestaltet ist und einen Porenanteil aufweist, der mindestens 60 Prozent beträgt und/oder um mindestens 30 Prozent größer ist als der Porenanteil der Diffusionsbarriere (51).

12. Sensorelement nach einem der vorhergehenden Ansprüche, **dadurch gekennzeichnet, dass** die erste Elektrode (41) und die zweite Elektrode (42) auf gegenüberliegenden Seiten der ersten Festelektrolytschicht (21) angeordnet sind, dass die erste und die zweite Elektrode (41, 42) kreisringförmig sind, und dass in der Mitte der ersten und zweiten Elektrode (41, 42) die Gaszutrittsöffnung (36) vorgesehen ist.

## Claims

1. Sensor element (10), in particular for detecting the concentration of a gas component of a measurement gas, preferably for determining the oxygen content of an exhaust gas of an internal combustion engine, having a first electrode (41) and having a second electrode (42) which are electrically connected by means of a solid electrolyte (21), the second electrode (42) being arranged in a measurement gas chamber (31) which is formed in the sensor element (10) and which is connected via a diffusion barrier (51) to the measurement gas situated outside the sensor element (10), and the volume of the measurement gas chamber (31) being no larger than the volume of the diffusion barrier (51), **characterized in that** the height of the measurement gas chamber (31), that is to say the extent thereof in a direction perpendicular to a layer plane of the sensor element (10), is at least in regions smaller than the height of the diffusion barrier (51), and **in that** a spacer layer (62, 63) is provided between the first solid electrolyte layer (21) and the second electrode (42) or on the second solid electrolyte layer (22), which spacer layer is composed of a material which has a solid electrolyte.

2. Sensor element according to Claim 1, **characterized in that** the diffusion barrier (51) is of cylindrical or hollow cylindrical form and is surrounded by the hollow cylindrical measurement gas chamber (31).

3. Sensor element according to Claim 1 or 2, **characterized in that** the diffusion barrier (51) and the measurement gas chamber (31) are arranged in a layer plane between a first solid electrolyte layer (21) and a second solid electrolyte layer (22), and **in that** the measurement gas chamber (31) surrounds the diffusion barrier (51) in said layer plane.

4. Sensor element according to Claim 3, **characterized in that** the first solid electrolyte layer (21) has formed in it a gas inlet opening (36) which leads to the centre of the diffusion barrier (51), and **in that** the measurement gas chamber (31) is connected via the diffusion barrier (51) and the gas inlet opening (36) to the measurement gas situated outside the sensor element (10).

5. Sensor element according to one of the preceding claims, **characterized in that** the volume of the measurement gas chamber (31) amounts to at most 80 per cent of the volume of the diffusion barrier (51).

6. Sensor element according to one of the preceding claims, **characterized in that** the height of the measurement gas chamber (31) amounts, at least in regions, to at most 80 per cent, in particular at most 65 per cent, of the height of the diffusion barrier (51).

7. Sensor element according to one of the preceding claims, **characterized in that** segments (64) are provided in the measurement gas chamber (31), in the region of which segments the height of the measurement gas chamber (31) amounts to at most 80 per cent, in particular at most 65 per cent, of the height of the diffusion barrier (51).

8. Sensor element according to Claim 7, **characterized in that**, in the region of the segments (64), the height of the measurement gas chamber (31) amounts to at least 10 per cent, in particular at least 25 per cent, of the height of the diffusion barrier (51).

9. Sensor element according to one of Claims 2 to 8, **characterized in that** the measurement gas chamber (31) has an outer diameter in the range from 2.5 mm to 4.5 mm, in particular of 3.3 mm, and **in that** the inner diameter of the measurement gas chamber (31) and therefore the outer diameter of the diffusion barrier (51) lies in the range from 2.0 mm to 3.5 mm, and is in particular 2.8 mm.

10. Sensor element according to Claim 9, **characterized in that** the second electrode (42) has a section which is arranged between the diffusion barrier (51) and the solid electrolyte (21), wherein said section of the second electrode (42) is separated from the diffusion barrier (51) by a gas-tight covering layer (61).

11. Sensor element according to one of the preceding claims, **characterized in that** the diffusion barrier (51) is of open-pored design and has a pore fraction in the range from 10 to 30 per cent, and **in that** the measurement gas chamber (31) is designed as a hollow chamber and has a pore fraction which amounts to at least 60 per cent and/or is at least 30 per cent greater than the pore fraction of the diffusion barrier (51).

12. Sensor element according to one of the preceding claims, **characterized in that** the first electrode (41) and the second electrode (42) are arranged on opposite sides of the first solid electrolyte layer (21), **in that** the first and second electrodes (41, 42) are of circular-ring-shaped form, and **in that** the gas inlet opening (36) is provided in the middle of the first and second electrodes (41, 42).

## Revendications

1. Elément de capteur (10), en particulier pour mettre en évidence la concentration en un composant gazeux d'un gaz de mesure, de préférence pour déterminer la teneur en oxygène d'un gaz d'échappement d'un moteur à combustion interne, comprenant une première électrode (41) et une deuxième électrode (42), qui sont connectées électriquement par un électrolyte solide (21), la deuxième électrode (42) étant disposée dans un espace de gaz de mesure (31) introduit dans l'élément de capteur (10), qui est en liaison par le biais d'une barrière de diffusion (51) avec le gaz de mesure se trouvant en dehors de l'élément de capteur (10), le volume de l'espace de gaz de mesure (31) n'étant pas supérieur au volume de la barrière de diffusion (51), **caractérisé en ce que** la hauteur de l'espace de gaz de mesure (31), c'est-à-dire son étendue dans une direction perpendiculaire à un plan de couche de l'élément de capteur (10), étant au moins en partie inférieure à la hauteur de la barrière de diffusion (51) et **en ce qu'**entre la première couche d'électrolyte solide (21) et la deuxième électrode (42) ou sur la deuxième couche d'électrolyte solide (22) est prévue une couche d'espacement (62, 63), qui se compose d'un matériau présentant un électrolyte fixe.

2. Elément de capteur selon la revendication 1, **caractérisé en ce que** la barrière de diffusion (51) est cylindrique ou cylindrique creuse et est entourée par l'espace de gaz de mesure (31) de forme cylindrique creuse.

3. Elément de capteur selon la revendication 1 ou 2, **caractérisé en ce que** la barrière de diffusion (51) et l'espace de gaz de mesure (31) sont disposés dans un plan de couche entre une première couche d'électrolyte solide (21) et une deuxième couche d'électrolyte solide (22), et **en ce que** l'espace de gaz de mesure (31) entoure la barrière de diffusion (51) dans ce plan de couche.

4. Elément de capteur selon la revendication 3, **caractérisé en ce que** dans la première couche d'électrolyte solide (21) est pratiquée une ouverture (36) d'entrée de gaz conduisant au centre de la barrière de diffusion (51), et **en ce que** l'espace de gaz de mesure (31) est connecté par le biais de la barrière de diffusion (51) et de l'ouverture (36) d'entrée de gaz au gaz de mesure se trouvant en dehors de l'élément de capteur (10).

5. Elément de capteur selon l'une quelconque des revendications précédentes, **caractérisé en ce que** le volume de l'espace de gaz de mesure (31) vaut au maximum 80 pour cent du volume de la barrière de diffusion (51).

6. Elément de capteur selon l'une quelconque des revendications précédentes, **caractérisé en ce que** la hauteur de l'espace de gaz de mesure (31) vaut au moins en partie au maximum 80 pour cent, en particulier au maximum 65 pour cent, de la hauteur de la barrière de diffusion (51).

7. Elément de capteur selon l'une quelconque des revendications précédentes, **caractérisé en ce que** dans l'espace de gaz de mesure (31) sont prévus des segments (64) dans la région desquels la hauteur de l'espace de gaz de mesure (31) vaut au maximum 80 pour cent, en particulier au maximum 65 pour cent, de la hauteur de la barrière de diffusion (51).

8. Elément de capteur selon la revendication 7, **caractérisé en ce que** dans la région des segments (64), la hauteur de l'espace de gaz de mesure (31) vaut au moins 10 pour cent, en particulier au moins 25 pour cent, de la hauteur de la barrière de diffusion (51).

9. Elément de capteur selon l'une quelconque des revendications 2 à 8, **caractérisé en ce que** l'espace de gaz de mesure (31) présente un diamètre extérieur de l'ordre de 2,5 mm à 4,5 mm, en particulier de 3,3 mm, et **en ce que** le diamètre intérieur de l'espace de gaz de mesure (31) et donc le diamètre extérieur de la barrière de diffusion (51) se situent dans une plage de 2,0 mm à 3,5 mm, en particulier valent environ 2,8 mm.

10. Elément de capteur selon la revendication 9, **caractérisé en ce que** la deuxième électrode (42) présente une portion, qui est disposée entre la barrière de diffusion (51) et l'électrolyte solide (21), cette portion de la deuxième électrode (42) étant séparée de la barrière de diffusion (51) par une couche de recouvrement étanche au gaz (61).

11. Elément de capteur selon l'une quelconque des revendications précédentes, **caractérisé en ce que** la barrière de diffusion (51) est configurée sous forme poreuse ouverte, et présente une proportion de pores de l'ordre de 10 à 30 pour cent, et **en ce que** l'espace de gaz de mesure (31) est réalisé sous forme de cavité et présente une proportion de pores qui est d'au moins 60 pour cent et/ou au moins 30 pour cent supérieure à la proportion de pores de la barrière de diffusion (51).

12. Elément de capteur selon l'une quelconque des revendications précédentes, **caractérisé en ce que** la première électrode (41) et la deuxième électrode (42) sont disposées sur des côtés opposés de la première couche d'électrolyte solide (21), **en ce que** la première et la deuxième électrode (41, 42) sont de forme annulaire circulaire, et **en ce qu'**au milieu de la première et de la deuxième électrode (41, 42) est prévue l'ouverture (36) d'entrée de gaz.
